# EUROPÄISCHE PATENTSCHRIFT

(11) **EP 1 021 334 B1**
(45) Veröffentlichungstag und Bekanntmachung des Hinweises auf die Patenterteilung: **21.07.2004**
(21) Anmeldenummer: 99944379.9
(22) Anmeldetag: 11.08.1999
(51) Int. Cl.: B64F 1/305

(54) **FLUGGASTBRÜCKE**
AIR PASSENGER BRIDGE
PASSERELLE TELESCOPIQUE

(30) Priorität: 11.08.1998 DE 19836327
(43) Veröffentlichungstag der Anmeldung: 26.07.2000
(73) Patentinhaber: Kubatzki, Klaus, 85521 Riemerling (DE)
(72) Erfinder: Kubatzki, Klaus, 85521 Riemerling (DE)
(86) Internationale Anmeldenummer: PCT/EP1999/005912
(87) Internationale Veröffentlichungsnummer: WO 2000/009395

(56) Entgegenhaltungen:
- DE-A- 1 814 165
- DE-A- 19 717 386
- DE-U- 29 807 465
- FR-A- 2 115 136

## Beschreibung

Die vorliegende Erfindung betrifft eine Fluggastbrücke, insbesondere für das Zusteigen von Fluggästen in und das Aussteigen von Fluggästen aus einem Flugzeug, mit mindestens einem neigungsverstellbaren Zugangstunnel, der horizontal schwenkbar ist und an einem Ende mit einer Einrichtung zum Andocken an das Flugzeug versehen ist.

Eine derartige Fluggastbrücke ist aus der DE-OS 18 14 165 bekannt. Die bekannte Fluggastbrücke stützt sich über ein selbstfahrendes Auflager am Rollfeld ab. Im Verfahrbereich dieses Auflagers kann das Rollfeld nicht genutzt werden und muß frei bleiben. Weiter kann die bekannte Fluggastbrücke nicht an einem Flügel des Flugzeugs vorbei verfahren werden.

Eine weitere Fluggastbrücke ist aus der US 3 728 754 bekannt. Diese Druckschrift beschreibt einen aufgeständerten, höhenverstellbaren Tunnel, von dem neigungsverstellbare Zugangstunnel abzweigen. Ein Teil des Rollfelds kann aufgrund der Ständer für den Tunnel nicht genutzt werden. Weiter handelt es sich um eine starre Konstruktion, die nur eine geringe Flexibilität aufweist. Aufgrund der starren Konstruktion können die Zugangstunnel nur geringfügig bewegt werden, so daß beim Rangieren eines Flugzeugs zudem Kollisionsgefahr besteht.

Mit den bekannten Fluggastbrücken können darüber hinaus nicht sämtliche Türen von Flugzeugen für das Zusteigen und Aussteigen von Fluggästen genutzt werden, so daß sich lange Boarding-Zeiten ergeben. Bereits bei den heutigen Großraumflugzeugen, wie beispielsweise einer Boeing 747 mit 400 Passagieren, werden für das Zusteigen beziehungsweise das Aussteigen 45 Minuten benötigt. Bei hoher Auslastung verbleibt das Flugzeug daher allein boardingbedingt 90 Minuten am Boden. Bei zukünftig zu erwartenden größeren Flugzeugen mit über 800 bis 1000 Sitzplätzen wird die Boarding-Zeit entsprechend vervielfacht. Derartig lange Boarding-Zeiten führen zu Abfertigungsengpässen an den Terminals. Weiter müssen die Flugzeugflotten aufgrund der langen Standzeiten vergrößert werden, um die gewünschte Anflughäufigkeit der einzelnen Zielorte zu gewährleisten.

Aufgabe der vorliegenden Erfindung ist es daher, eine Fluggastbrücke bereitzustellen, die eine große Flexibilität und ein geringes Gefährdungspotential aufweist, wobei gleichzeitig die Boarding-Zeiten verringert werden sollen.

Erfindungsgemäß wird diese Aufgabe bei einer Fluggastbrücke der eingangs genannten Art dadurch gelöst, daß die Fluggastbrücke mindestens einen auf einem Ständer gelagerten horizontal schwenkbaren Ausleger umfaßt, an dem der mindestens eine Zugangstunnel angelenkt ist.

Der Ausleger ermöglicht ein Anlenken des Zugangstunnels ohne Abstützung. Das gesamte Rollfeld ist daher mit Ausnahme des feststehenden Ständers frei zugänglich. Es besteht keinerlei Verletzungsgefahr am Rollfeld bei einer Bewegung des Zugangstunnels. Aufgrund der Schwenkbarkeit des Auslegers können die Flugzeuge ohne weiteres bei weggeschwenktem Ausleger in die vorgesehene Boarding-Position verbracht werden. Sobald die Boarding-Position erreicht ist, wird der Ausleger verschwenkt und der Zugangstunnel an das Flugzeug angedockt. Während der Bewegung des Flugzeugs liegt stets ein ausreichender Abstand zwischen der Fluggastbrücke und dem Flugzeug vor. Durch die Neigungsverstellung und damit Höhenanpassung des Zugangstunnels können Türen auf unterschiedlichen Höhen des Flugzeugs bedient werden. Hierdurch ergibt sich eine hohe Flexibilität.

Es ist weiterhin möglich, den Zugangstunnel über die Tragfläche eines Flugzeugs zu bewegen, so daß sämtliche Türen des Flugzeugs genutzt werden können. Eine ausladende, sich am Rollfeld abstützende Konstruktion ist hierfür erfindungsgemäß nicht mehr erforderlich.

Vorteilhafte Ausgestaltungen und Weiterbildungen gehen aus den Unteransprüchen hervor.

Vorteilhaft ist der Zugangstunnel höhenverstellbar ausgebildet. Erfindungsgemäß ist diese Höhenverstellung ohne eine Änderung der Neigung des Zugangstunnels realisierbar. Dies ermöglicht das Andocken an Türen des Flugzeugs auf unterschiedlichen Höhen, ohne daß die Neigung des Zugangstunnels einen bestimmten Wert überschreitet.

In vorteilhafter Ausgestaltung ist der Zugangstunnel an einem Aufhängepunkt, an zwei Aufhängepunkten oder an drei Aufhängepunkten an dem Ausleger angelenkt.

Die Neigungsverstellung des Zugangstunnels erfolgt mittels verstellbarer Gestänge in den Aufhängepunkten. Bei Verwendung nur eines Aufhängepunktes ergibt sich eine einfache und kostengünstige Konstruktion. Werden zwei oder drei Aufhängepunkte verwendet, ist eine Höhenverstellung des Zugangstunnels an dem Ständer nicht erforderlich. Es bietet sich dann an, den Zugangstunnel im Bereich des Ständers mit einer Fluchttreppe zu versehen. Selbstverständlich kann diese Fluchttreppe auch bei einer Höhenverstellung des Zugangstunnels gegenüber dem Ständer vorgesehen werden. Die Verwendung von drei Aufhängepunkten ermöglicht ein Abknicken des Zugangstunnels. Es kann insbesondere der erste Abschnitt im wesentlichen waagrecht über eine Tragfläche des Flugzeugs geführt und anschließend der zweite Abschnitt anschließend etwas steiler zur Tür gerichtet werden. Der vorgeschriebene Sicherheitsabstand zwischen der Tragfläche und dem Zugangstunnel kann so für eine Vielzahl von unterschiedlichen Flugzeugtypen eingehalten werden.

Nach einer vorteilhaften Weiterbildung ist der Zugangstunnel an dem Ständer höhenverstellbar geführt. Hierdurch wird die Flexibilität der erfindungsgemäßen Fluggastbrücke weiter erhöht.

Der Zugangstunnel kann hierbei in eine Stellung verfahren werden, bei der sein dem Ständer zugeordnetes Ende höher liegt als das Ende mit der Einrichtung zum Andocken. Er ist in dieser Stellung vom Ständer ausgehend nach unten geneigt. Es ist auch ein Verfahren in eine entgegengesetzte Stellung möglich. In dieser Stellung ist der Zugangstunnel ausgehend vom Ständer nach oben geneigt. Das Ende mit der Einrichtung zum Andocken liegt dann oberhalb des dem Ständer zugeordneten Endes.

Vorteilhaft ist der Ausleger mit einem Gegengewicht versehen. Dieses Gegengewicht kompensiert zumindest teilweise das Gewicht des Zugangstunnels, so daß die Belastung der gesamten Konstruktion verringert wird.

Gemäß einer vorteilhaften Ausgestaltung sind der Zugangstunnel und der Ausleger teleskopierbar ausgebildet. Die resultierende Längenverstellbarkeit ermöglicht eine optimale Anpassung an unterschiedliche Flugzeugtypen.

In vorteilhafter Weiterbildung sind zwei horizontal schwenkbare Ausleger vorgesehen. Durch die Verwendung von zwei Auslegern kann die Zahl der Zugangstunnel erhöht werden, so daß die Boarding-Zeiten weiter verringert werden.

Vorteilhaft sind die beiden horizontal schwenkbaren Ausleger an demselben Ständer gelagert. Hierdurch werden die investitionskosten für die erfindungsgemäße Fluggastbrücke verringert.

Nach einer vorteilhaften Weiterbildung greifen die beiden Ausleger ineinander. Sie können auf derselben Drehachse gelagert sein oder unterschiedliche Drehachsen aufweisen. Auch die Längen der beiden Ausleger können gleich oder unterschiedlich gewählt werden.

In vorteilhafter erster Ausgestaltung sind die beiden Ausleger unabhängig voneinander beweglich. Diese Beweglichkeit wird durch das Ineinandergreifen der beiden Ausleger erleichtert. Der Zugangstunnel des ersten Auslegers kann dann an eine erste Tür und der Zugangstunnel des zweiten Auslegers an eine zweite Tür angedockt werden. Es ist auch ein Andocken an zwei unterschiedliche Flugzeuge möglich.

Gemäß einer zweiten vorteilhaften Ausgestaltung sind die beiden Ausleger miteinander gekoppelt. Zur Kopplung kann insbesondere eine teleskopierbare Verstrebung vorgesehen sein. Durch die Kopplung der beiden Ausleger werden Kollisionen der Zugangstunnel zuverlässig vermieden.

Nach einer vorteilhaften Weiterbildung sind die beiden Ausleger an zueinander beabstandeten Ständern gelagert und über einen starren Querträger miteinander gekoppelt. Es ergibt sich ein etwa parallelogrammförmiger Aufbau der erfindungsgemäßen Fluggastbrücke. Der oder die Zugangstunnel können entweder direkt an den Auslegern oder an dem starren Querträger befestigt werden. Zur optimalen Anpassung an unterschiedliche Flugzeugtypen sind die jeweils vorgesehenen Einrichtungen zum Andocken an das Flugzeug vertikal und horizontal verstellbar.

In vorteilhaften Ausgestaltung ist dem Zugangstunnel eine Verlängerung zugeordnet, die mit mindestens einer weiteren Einrichtung zum Andocken an das Flugzeug versehen ist. Über einen einzigen Zugangstunnel und die zugehörige Verlängerung kann somit an mindestens zwei Türen des Flugzeugs angedockt werden. Die Zahl der erforderlichen Zugangstunnel und damit die Investitionskosten werden verringert.

Gemäß einer vorteilhaften Weiterbildung ist die Verlängerung gegenüber dem Zugangstunnel schwenkbar und/oder neigungsverstellbar. Vorteilhaft ist die Verlängerung weiter teleskopierbar. Diese verschiedenen Verstellmöglichkeiten führen zu hoher Flexibilität bei geringen Investitionskosten.

Nachstehend wird die Erfindung anhand von Ausführungsbeispielen näher beschrieben, die schematisch in der Zeichnung dargestellt sind. Gleiche oder funktionsidentische Bauteile sind hierbei mit denselben Bezugszeichen versehen. Dabei zeigt:
- Figur 1 - 3: drei unterschiedliche Ausführungsformen einer erfindungsgemäßen Fluggastbrücke mit einem Ausleger;
- Figur 4: eine schematische Seitenansicht einer weiteren Ausführungsform einer erfindungsgemäßen Fluggastbrücke mit einem Ausleger;
- Figur 5 - 7: verschiedene Ausführungsformen einer Fluggastbrücke mit zwei Auslegern;
- Figur 8: eine weitere Ausführungsform der erfindungsgemäßen Fluggastbrücke;
- Figur 9: eine Draufsicht auf die Ausführungsform gemäß Figur 8;
- Figur 10: eine perspektivische Darstellung einer weiteren Ausführungsform der erfindungsgemäßen Fluggastbrücke.

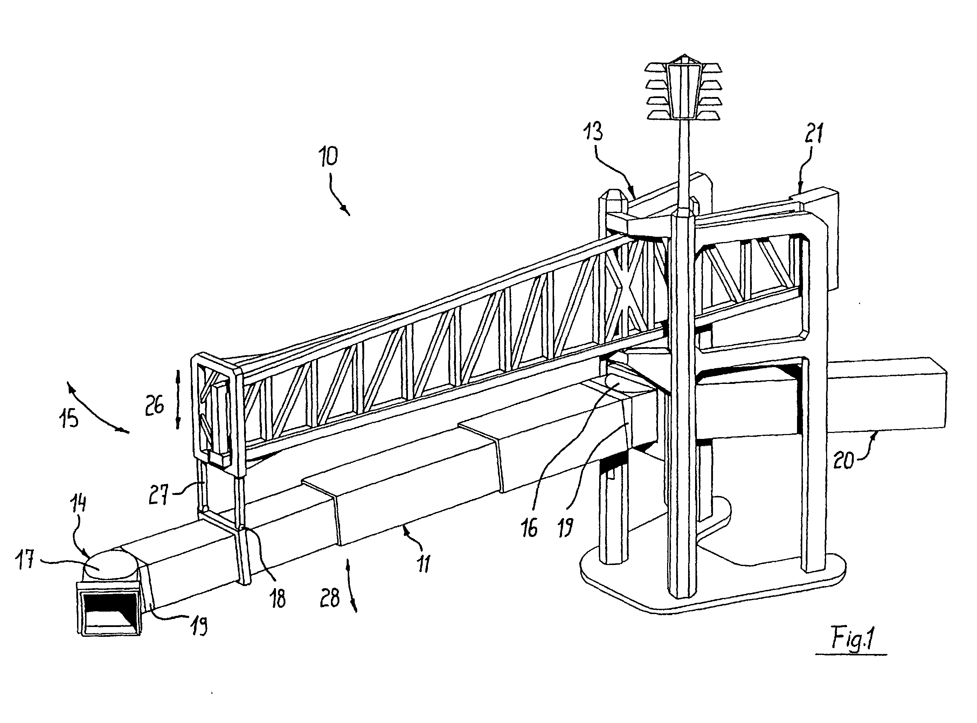

Figur 1 zeigt eine erste Ausführungsform einer erfindungsgemäßen Fluggastbrücke 10 mit einem Zugangstunnel 11 und einem Ausleger 12. Der Ausleger 12 ist an einem feststehenden Ständer 13 in Pfeilrichtung 15 horizontal schwenkbar gelagert. Der Zugangstunnel 11 ist an einem Aufhängepunkt 18 über ein Gestänge 27 an dem Ausleger 12 angelenkt. Das Gestänge 27 ermöglicht eine Höhenverstellung in Pfeilrichtung 26. Über das Gestänge 27 und ein Gelenk 19 kann die Neigung des Zugangstunnels 11 gemäß Pfeilrichtung 28 verändert werden.

An seinem dem Ständer 13 zugeordneten Ende weist der Zugangstunnel 11 ein weiteres Gelenk 16 zur Verschwenkung zusammen mit dem Ausleger 12 auf. An das Gelenk 16 schließt sich ein weiterer Tunnel 20 an, der mit einem nicht näher dargestellten Abfertigungsgebäude in Verbindung steht. In diesem Tunnel 20 können nicht näher dargestellte Laufbänder vorgesehen sein.

Der Zugangstunnel 11 ist auch an dem Ständer 13 höhenverstellbar geformt. Diese Verstellbarkeit ist schematisch mit der Pfeilrichtung 26 angedeutet.

An seinem gegenüberliegenden Ende ist der Zugangstunnel 11 mit einem weiteren Gelenk 17 sowie einer Andockeinrichtung 14 zum Andocken an ein Flugzeug versehen. Das Gelenk 17 ermöglicht ein Schwenken der Andockeinrichtung 14 in Pfeilrichtung 15. Zum Ausgleich der Neigung des Zugangstunnels 11 ist ein weiteres Gelenk 19 vorgesehen.

Das Gewicht des Auslegers 12 sowie zumindest ein Teil des Gewichts des Zugangstunnels 11 werden über ein Gegengewicht 21 an dem Ausleger 12 kompensiert. Hierdurch wird die Belastung der gesamten Konstruktion verringert. Das Gegengewicht 21 bewirkt weiter eine Schwingungsdämpfung.

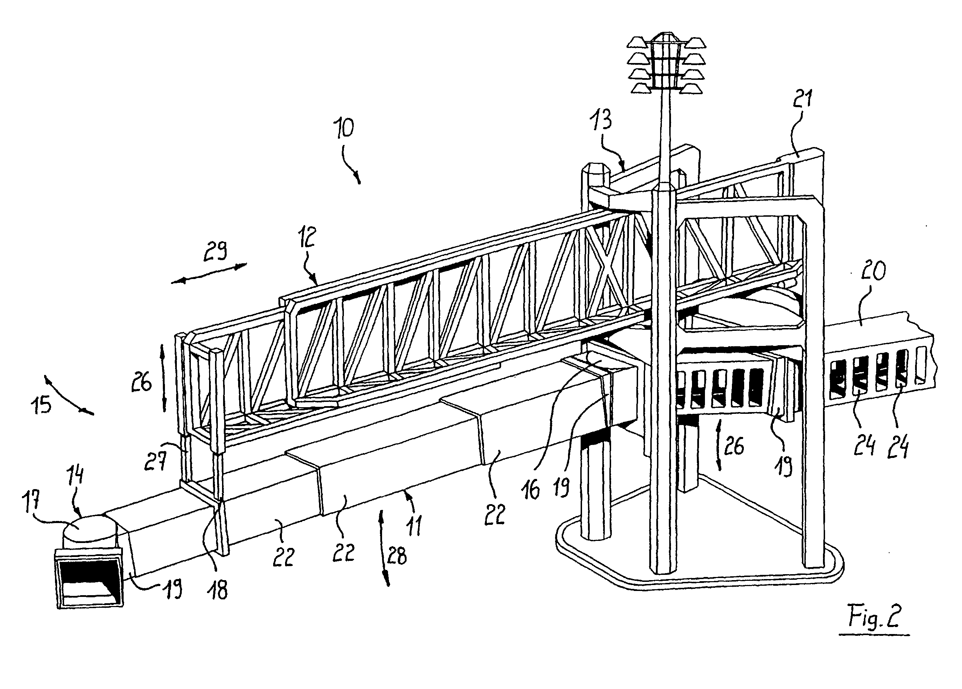

Figur 2 zeigt eine weitere Ausführungsform, bei der der Zugangstunnel 11 und der Ausleger 12 in Pfeilrichtung 29 teleskopierbar ausgebildet sind. Der Zugangstunnel 11 weist entsprechend eine Reihe von ineinandergreifenden Abschnitten 22 auf, die zueinander verschoben werden können. Weiter ist der Zugangstunnel 11 im Bereich des Ständers 13 höhenverstellbar. Zusammen mit dem Gestänge 27 kann somit der gesamte Zugangstunnel 11 ohne Änderung in der Neigung auf unterschiedliche Höhen gefahren werden. Die Verbindung zu dem Tunnel 20, der im vorliegenden Fall mit Fenstern 24 versehen ist, erfolgt über ein weiteres Gelenk 19.

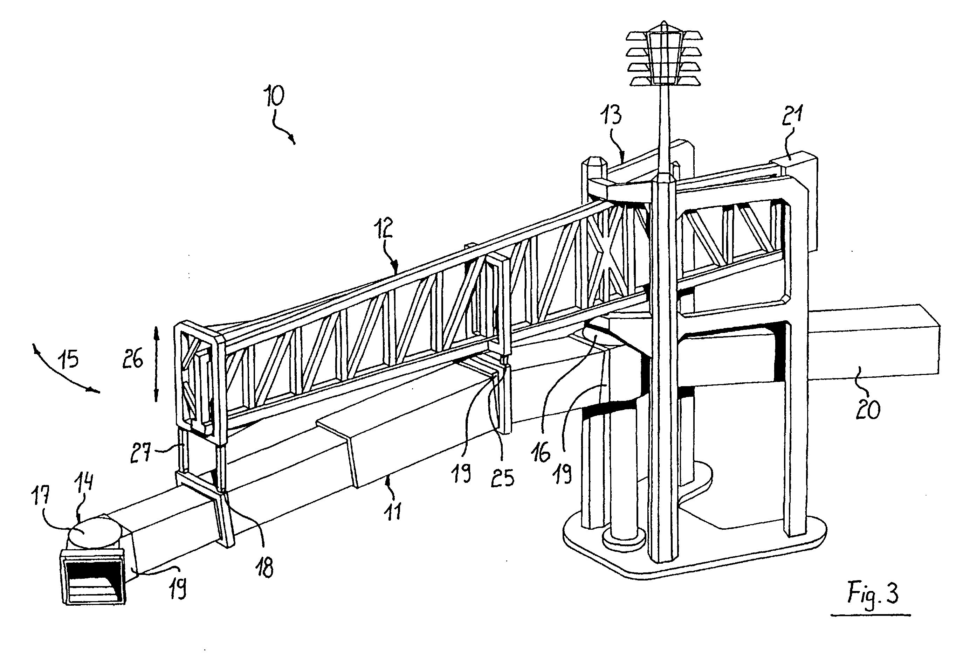

Figur 3 zeigt eine weitere Ausführungsform, bei der der Zugangstunnel 11 an zwei Aufhängepunkten 18, 25 an dem Ausleger 12 angelenkt ist. Bei beiden Aufhängepunkten 18, 25 ist ein Gestänge 27 vorgesehen, das eine Höhenverstellung in Pfeilrichtung 26 ermöglicht. Eine Höhenverstellung des Zugangstunnels 11 im Bereich des Ständers 13 ist dann nicht erforderlich. Es kann daher im Innenraum des Ständers 13 ohne Schwierigkeiten eine nicht näher dargestellte Fluchttreppe eingebaut werden. Diese Fluchttreppe kann auch bei einer Höhenverstellung des Zugangstunnels 11 gegenüber dem Ständer 13 vorgesehen werden.

Die beiden Gestänge 27 können unabhängig voneinander aus- und eingefahren werden, so daß der Zugangstunnel 11 sowohl in der Neigung als auch in der Höhe verstellbar ist.

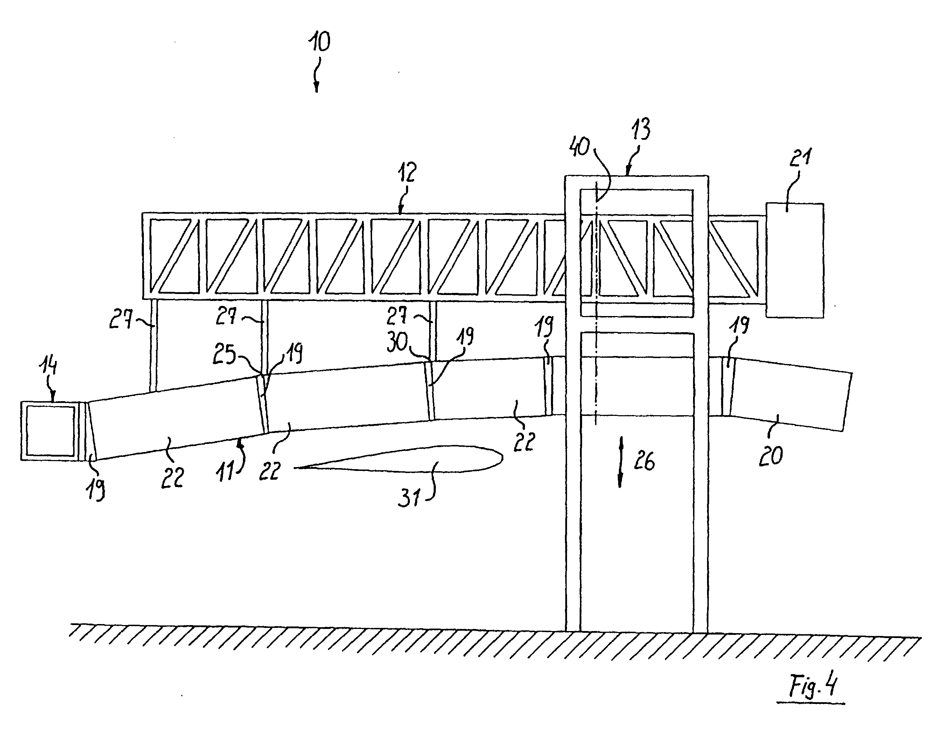

Figur 4 zeigt eine weitere Ausführungsform einer erfindungsgemäßen Fluggastbrücke 10, in der der Zugangstunnel 11 an drei Aufhängepunkten 18, 25, 30 an dem Ausleger 12 angelenkt ist. Zusätzlich ist der Zugangstunnel 11 im Bereich des Ständers 13 in Pfeilrichtung 26 höhenverstellbar geführt.

Die gemeinsame Schwenkachse 40 des Zugangstunnels 11 und des Auslegers 12 liegt in der dargestellten Ausführungsform im Inneren des Ständers 13.

Durch die Verwendung von drei Aufhängepunkten 18, 25, 30 und der zugehörigen Höhenverstellung in Pfeilrichtung 26 mittels der Gestänge 27 ergibt sich eine optimale Anpassung an unterschiedliche Flugzeugtypen. Der Zugangstunnel 22 kann insbesondere mit ausreichendem Sicherheitsabstand über einen Flügel 31 verschwenkt werden. Anschließend werden die Gestänge 27 betätigt, so daß die einzelnen Abschnitte 22 des Zugangstunnels 11 in die in Figur 4 dargestellte Position abgesenkt werden. Zur Verbindung zwischen den einzelnen Abschnitten 22 dienen Gelenke 19, die die Neigungsunterschiede zwischen den Abschnitten 22 ausgleichen. Die Andockeinrichtung 14 am freien Ende des Zugangstunnels 11 kann somit auf eine Höhe abgesenkt werden, die unterhalb des Flügels 31 liegt. Dies ermöglicht eine optimale Anpassung an unterschiedliche Flugzeugtypen mit verschiedenen Türpositionen.

Nach Abschluß des Boarding werden die Gestänge 27 verkürzt und der Zugangstunnel 11 angehoben. Anschließend wird der Ausleger 12 zusammen mit dem Zugangstunnel 11 horizontal von dem Flugzeug weggeschwenkt. Das Flugzeug kann anschließend entweder aus eigener Kraft oder durch einen Schlepper von der Boarding-Position in die Startposition bewegt werden. Anschließend wird ein neues Flugzeug in die Boarding-Position gebracht, und der Zugangstunnel 11 und der Ausleger 1 2 werden horizontal verschwenkt und an das Flugzeug herangeführt. Dieselbe Abfolge wird auch bei den anderen beschriebenen Ausführungsformen eingehalten.

Während der Bewegung des Flugzeugs sind der Zugangstunnel 11 und der Ausleger 12 von diesem weggeschwenkt. Die Kollisionsgefahr wird daher auf ein Minimum reduziert. Durch die Höhenverstellung, Neigungsverstellung und Teleskopierbarkeit des Zugangstunnels 11 in Kombination mit einem oder mehreren Aufhängepunkten 18, 25, 30 wird eine optimale Anpassung an unterschiedliche Flugzeugtypen und Türpositionen erreicht.

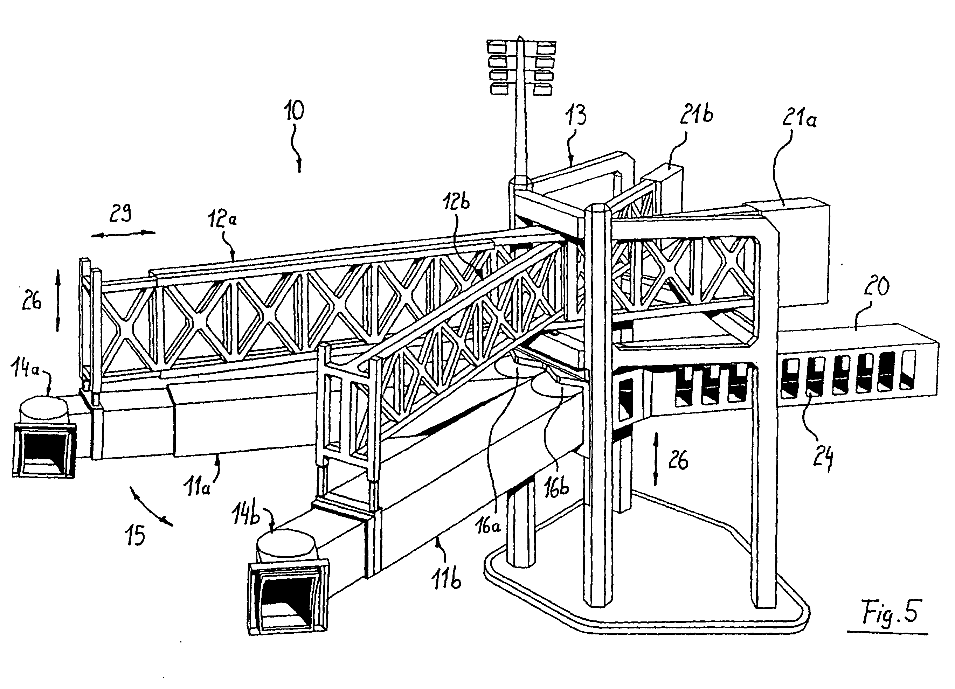

Figur 5 zeigt eine weitere Ausführungsform einer Fluggastbrücke mit zwei ineinandergreifenden Auslegern 12a, 12b. Die beiden Ausleger 12a, 12b sind an demselben Ständer 13 gelagert und unabhängig voneinander beweglich. Der Ausleger 12a und der Zugangstunnel 11a sind in Pfeilrichtung 29 teleskopierbar. Zur Anbindung an den Tunnel 20 dienen wiederum Gelenke 16a, 16b, die unmittelbar nebeneinander angeordnet sind.

Jedem der Ausleger 12a, 12b ist genau ein Zugangstunnel 11a, 11b zugeordnet. Da die Ausleger 12a, 12b unabhängig voneinander beweglich sind, können die Zugangstunnel 11a, 11b an dasselbe oder an unterschiedliche Flugzeuge auf unterschiedlichen Höhen angedockt werden.

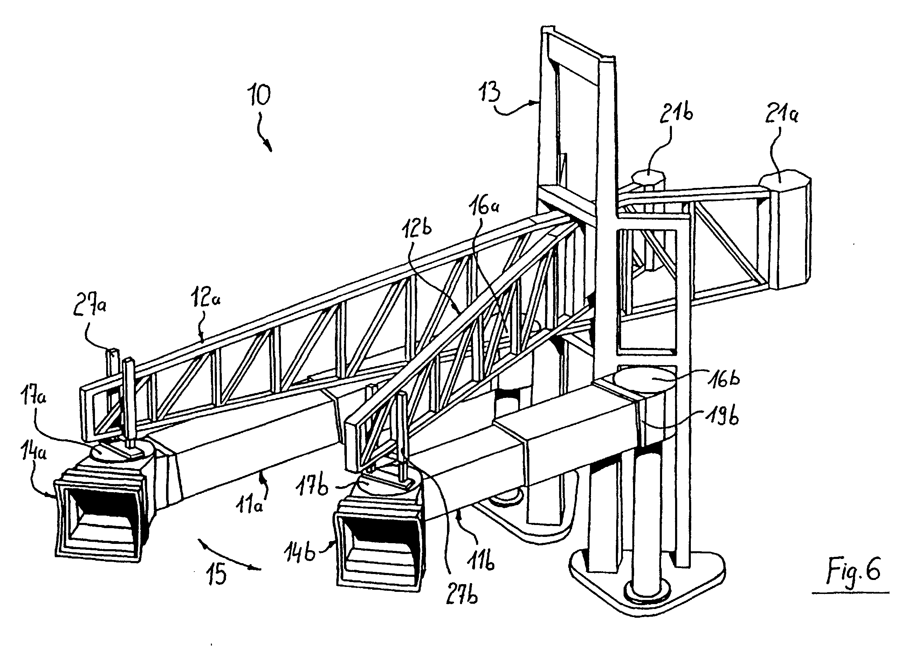

Bei der Ausführungsform gemäß Figur 6 sind wiederum zwei unabhängig voneinander bewegliche und ineinandergreifende Ausleger 12a, 12b vorgesehen, die an demselben Ständer 13 angeordnet sind. Die Zugangstunnels 11a, 11b sind über Gelenke 16a, 16b mit einem nicht näher dargestellten, weiteren Tunnel verbunden. Im Unterschied zur Ausführungsform gemäß Figur 5 sind die beiden Gelenke 16a, 16b zueinander beabstandet.

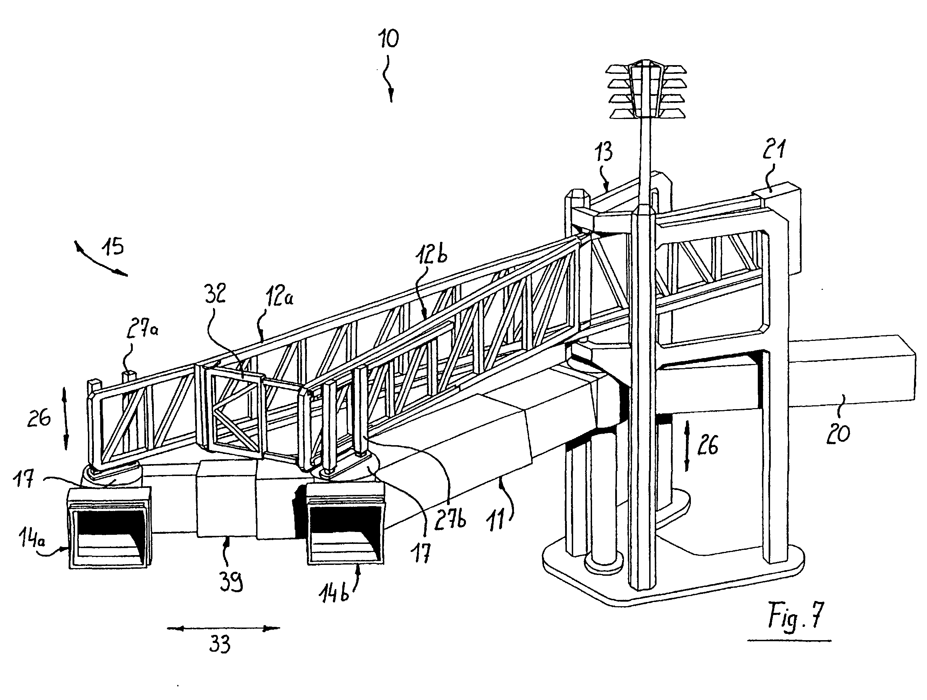

Figur 7 zeigt eine weitere Ausführungsform einer Fluggastbrücke 10, bei der zwei miteinander gekoppelte Ausleger 12a, 1 2b an demselben Ständer 13 angeordnet sind. Die Kopplung der beiden Ausleger erfolgt über eine teleskopierbare Verstrebung 32. Mittels dieser Verstrebung kann der Abstand zwischen den beiden Auslegern 12a, 12b eingestellt werden. Beiden Auslegern 12a, 12b ist ein gemeinsames Gegengewicht 21 zugeordnet. Der Zugangstunnel 11 ist an dem Ausleger 12b angelenkt und im Bereich des Gelenks 17 in Pfeilrichtung 26 höhenverstellbar. Dem Zugangstunnel 11 ist eine Verlängerung 39 zugeordnet, die von der Andockeinrichtung 14b des Zugangstunnels 11 zu einer weiteren Andockeinrichtung 14a läuft. Diese Andockeinrichtung 14a ist im Bereich eines weiteren Gelenks 17 an dem ersten Ausleger 12a angelenkt und ebenfalls höhenverstellbar. Die Verlängerung 39 ist teleskopierbar, so daß der Abstand zwischen den beiden Andockeinrichtungen 14a, 14b variiert werden kann. Dies ist schematisch durch die Pfeilrichtung 33 angedeutet.

Die Verlängerung 39 ist weiter gegenüber dem Zugangstunnel 11 schwenkbar und neigungsverstellbar. Auf diese Weise können die beiden Andockeinrichtungen 14a, 14b auf unterschiedliche Höhen verfahren werden.

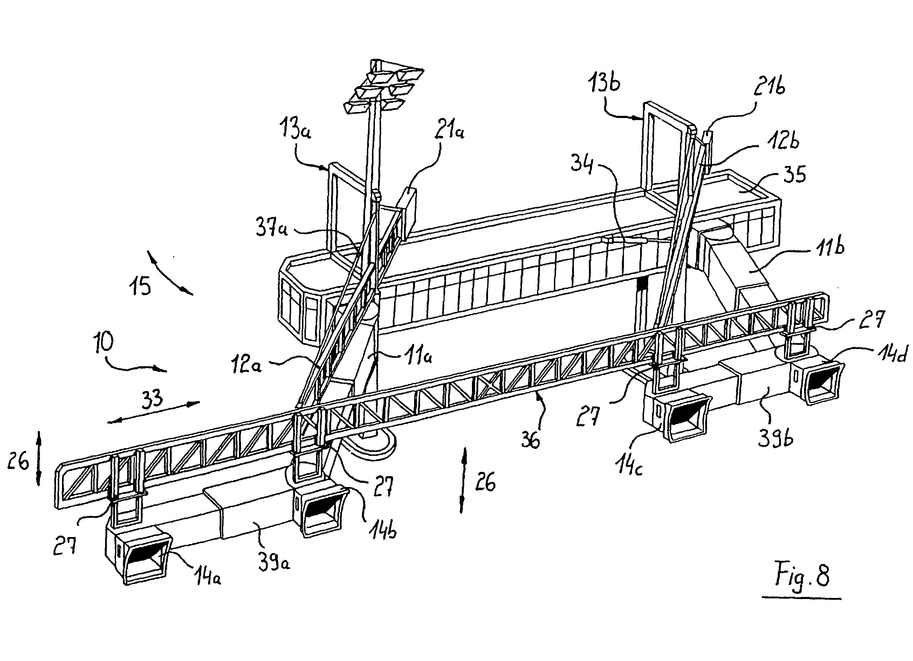

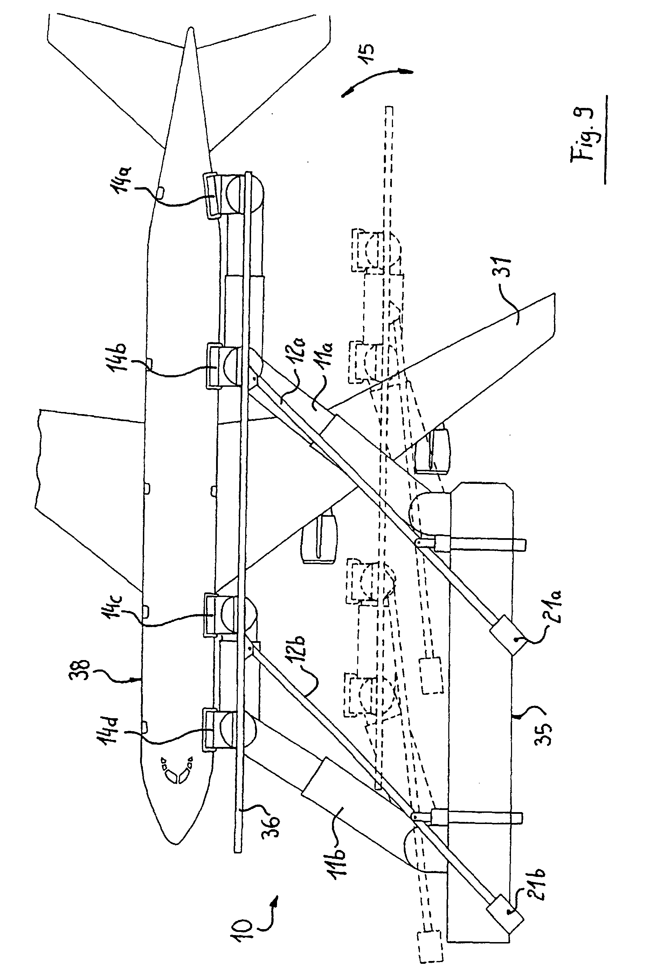

Die Figuren 8 und 9 zeigen eine weitere Ausführungsform einer erfindungsgemäßen Fluggastbrücke 10. Es sind zwei Ausleger 12a, 12b vorgesehen, die an zueinander beabstandeten Ständern 13a, 13b gelagert sind. Die Ausleger 12a, 12b sind von Spannseilen 37a, 37b verstärkt und über einen Querträger 36 miteinander gekoppelt. Der Querträger 36 ist hierbei starr ausgebildet. In Abhängigkeit vom konkreten Anwendungsfall können die Spannseile 37a, 37b auch entfallen.

Jedem Ausleger 12a, 12b ist ein Zugangstunnel 11a, 11b zugeordnet, der in ein Zugangsgebäude 35 mündet. Das Zugangsgebäude 35 ist auf nicht näher dargestellte Weise mit einem Terminal verbunden.

Jedem Zugangstunnel 11a, 11b ist eine Verlängerung 39a, 39b zugeordnet. Die einzelnen Andockeinrichtungen 14a, 14b, 14c, 14d sind über Gestänge 27 an dem Querträger 36 in Pfeilrichtung 26 höhenverstellbar. Sie können weiter über nicht näher dargestellte Einrichtungen in Pfeilrichtung 33 entlang des Querträgers 36 verfahren werden.

Figur 9 zeigt eine Draufsicht auf die Fluggastbrücke 10 gemäß Figur 8. In durchgezogenen Linien ist die Boarding-Position der Fluggastbrücke 10 dargestellt. Die Andockeinrichtungen 14a, 14b, 14c, 14d sind an ein Flugzeug 38 angedockt. Der Querträger 36 erstreckt sich hierbei über die Tragfläche 31 des Flugzeugs 38 hinweg. Aufgrund der Verstellbarkeit der Andockeinrichtungen 14a, 14b, 14c, 14d können vier an dem Flugzeug 38 vorgesehene Türen für das Boarding genutzt werden.

Nach Abschluß des Boarding wird die Fluggastbrücke 10 in ihre in Strichlinien dargestellte Position verschwenkt. Hierdurch wird der Abstand zwischen der Fluggastbrücke 10 und dem Flugzeug 38 wesentlich vergrößert, so daß das Flugzeug 38 ohne Kollisionsgefahr rangieren kann.

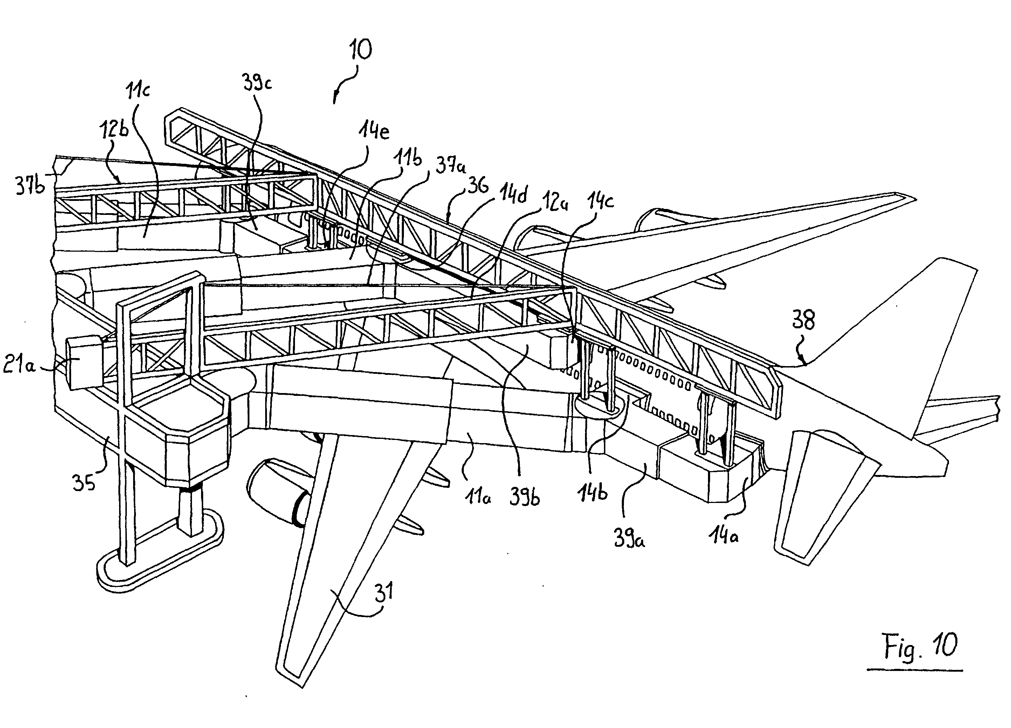

Figur 10 zeigt eine perspektivische Darstellung einer weiteren Ausführungsform einer Fluggastbrücke 10. Es sind wiederum zwei Ausleger 12a, 12b vorgesehen, die an zueinander beabstandeten Ständern 13a, 13b gelagert und über einen Querträger 36 miteinander gekoppelt sind. In der Ausführungsform gemäß Figur 10 sind drei Zugangstunnels 11a, 11b, 11c mit Verlängerungen 39a, 39b, 39c vorgesehen. Die Fluggastbrücke 10 gemäß Figur 10 ermöglicht somit ein Andocken an sechs Türen eines Flugzeugs 38 und damit eine wesentliche Verringerung der Boarding-Zeit. Auch hier können die Spannseile 37a, 37b in Abhängigkeit vom konkreten Anwendungsfall auch entfallen.

Alle Ausführungsformen der erfindungsgemäßen Fluggastbrücke verwenden einen oder mehrere horizontal schwenkbare Ausleger 1 2, die weit oberhalb des Rollfeldes angebracht sind. Verletzungen im Bereich des Rollfelds bei einem Verschwenken der Ausleger 12 und der Zugangstunnel 11 werden somit ausgeschlossen. Gleichzeitig kann die erfindungsgemäße Fluggastbrücke 10 ohne weiteres über einen Flügel 31 eines Flugzeugs hinweg verschwenkt und anschließend in die Boarding-Position abgesenkt werden. Es sind somit sämtliche Türen eines Flugzeugs 38 nutzbar, so daß die Boarding-Zeiten wesentlich verkürzt werden. Während des Rangierens des Flugzeugs 38 sind die Ausleger 12 und die Zugangstunnel 11 weggeschwenkt, so daß ein relativ großer Abstand zwischen dem Flugzeug 38 und der Fluggastbrücke 10 besteht. Die Kollisionsgefahr wird hierdurch wesentlich verringert. Weiter kann die erfindungsgemäße Fluggastbrücke aufgrund der Verstellmöglichkeiten der Zugangstunnel 11 an eine Vielzahl unterschiedlicher Flugzeugtypen und Flugzeuggrößen angepaßt werden.

## Patentansprüche

1. Fluggastbrücke, insbesondere für das Zusteigen von Fluggästen in und das Aussteigen von Fluggästen aus einem Flugzeug (38), mit mindestens einem neigungsverstellbaren Zugangstunnel (11), der horizontal schwenkbar ist und an einem Ende mit einer Einrichtung (14) zum Andokken an das Flugzeug (38) versehen ist, **dadurch gekennzeichnet, daß** die Fluggastbrücke (10) mindestens einen auf einem Ständer (13) gelagerten horizontal schwenkbaren Ausleger (12) umfaßt, an dem der mindestens eine Zugangstunnel (11) angelenkt ist.

2. Fiuggastbrücke nach Anspruch 1, **dadurch gekennzeichnet, daß** der Zugangstunnel (11) höhenverstellbar ausgebildet ist.

3. Fluggastbrücke nach Anspruch 1 oder 2, **dadurch gekennzeichnet, daß** der Zugangstunnel (11) an einem Aufhängepunkt (18), an zwei Aufhängepunkten (18, 25) oder an drei Aufhängepunkten (18, 25, 30) an dem Ausleger (12) angelenkt ist.

4. Fluggastbrücke nach einem der Ansprüche 1 bis 3, **dadurch gekennzeichnet, daß** der Zugangstunnel (11) an dem Ständer (13) höhenverstellbar geführt ist.

5. Fluggastbrücke nach einem der Ansprüche 1 bis 4, **dadurch gekennzeichnet, daß** der Ausleger (12) mit einem Gegengewicht (21) versehen ist.

6. Fluggastbrücke nach einem der Ansprüche 1 bis 5, **dadurch gekennzeichnet, daß** der Zugangstunnel (11) und der Ausleger (12) teleskopierbar ausgebildet sind.

7. Fluggastbrücke nach einem der Ansprüche 1 bis 6, **dadurch gekennzeichnet, daß** zwei horizontal schwenkbare Ausleger (12a, 12b) vorgesehen sind.

8. Fluggastbrücke nach Anspruch 7, **dadurch gekennzeichnet, daß** die beiden horizontal schwenkbaren Ausleger (12a, 12b) an demselben Ständer (13) gelagert sind.

9. Fluggastbrücke nach Anspruch 8, **dadurch gekennzeichnet, daß** die beiden Ausleger (12a, 12b) ineinander greifen.

10. Fluggastbrücke nach einem der Ansprüche 7 bis 9, **dadurch gekennzeichnet, daß** die beiden Ausleger (12a, 12b) unabhängig voneinander beweglich sind.

11. Fluggastbrücke nach einem der Ansprüche 7 bis 9, **dadurch gekennzeichnet, daß** die beiden Ausleger (12a, 12b) miteinander gekoppelt sind.

12. Fluggastbrücke nach Anspruch 11, **dadurch gekennzeichnet, daß** zur Koppelung der beiden Ausleger (12a, 12b) eine teleskopierbare Verlängerung (32) vorgesehen ist.

13. Fluggastbrücke nach Anspruch 7 und 11, **dadurch gekennzeichnet, daß** die beiden Ausleger (12a, 12b) an zueinander beabstandeten Ständern (13a, 13b) gelagert und über einen Querträger (36) miteinander gekoppelt sind.

14. Fluggastbrücke nach einem der Ansprüche 1 bis 13, **dadurch gekennzeichnet, daß** dem Zugangstunnel (11) eine Verlängerung (39) zugeordnet ist, die mit mindestens einer weiteren Einrichtung (14) zum Andocken an das Flugzeug (38) versehen ist.

15. Fluggastbrücke nach Anspruch 14, **dadurch gekennzeichnet, daß** die Verlängerung (39) gegenüber dem Zugangstunnel (11) schwenkbar und/oder neigungsverstellbar ist.

16. Fluggastbrücke nach Anspruch 14 oder 15, **dadurch gekennzeichnet, daß** die Verlängerung (39) teleskopierbar ist.

## Claims

1. Air passenger bridge, developed in particular for the access and exit of passengers into and out of an aircraft (38), provided with at least one angle-adjustable, horizontally slewable access tunnel (11), one end of which is equipped with a docking unit (14) connecting the gangway with the aircraft (38), **characterized in that** the air passenger bridge (10) comprises at least one horizontally slewable cantilever arm (12), which runs on bearings integrated in a support structure (13), and on which at least one access tunnel is hinged (11).

2. Air passenger bridge as set forth in claim 1, **characterized in that** the access tunnel (11) is vertically adjustable.

3. Air passenger bridge as set forth in claim 1 or 2, **characterized in that** the access tunnel (11) is hinged on the cantilever arm (12) by way of one suspension point (18), two suspension points (18, 25) or three suspension points (18, 25, 30).

4. Air passenger bridge as set forth in one of the claims 1 to 3, **characterized in that** the access tunnel (11) is guided vertically adjustable on the support structure (13).

5. Air passenger bridge as set forth in one of the claims 1 to 4, **characterized in that** the cantilever arm (12) is provided with a balance weight (21).

6. Air passenger bridge as set forth in one of the claims 1 to 5, **characterized in that** said access tunnel (11) and said cantilever arm (12) are telescopable.

7. Air passenger bridge as set forth in one of the claims 1 to 6, **characterized in that** it is provided with two horizontally slewable cantilever arms (12a, 12b).

8. Air passenger bridge as set forth in claim 7, **characterized in that** said two horizontally slewable cantilever arms (12a, 12b) run on bearings integrated in the same support structure (13).

9. Air passenger bridge as set forth in claim 8, **characterized in that** said two cantilever arms (12a, 12b) are interlocked.

10. Air passenger bridge as set forth in claims 7 to 9, **characterized in that** the said two cantilever arms (12a, 12b) can be moved individually.

11. Air passenger bridge as set forth in one of the claims 7 to 9, **characterized in that** the said two cantilever arms (12a, 12b) are coupled to each other.

12. Air passenger bridge as set forth in claim 11, **characterized in that** for the purpose of coupling the two cantilever arms (12a, 12b) a telescopable extension (32) is provided.

13. Air passenger bridge as set forth in claims 7 and 11, **characterized in that** the two cantilever arms (12a, 12b) run on bearings which are integrated in support structures (13a , 13b) positioned in a spaced relationship to each other and **in that** they are coupled to each other by way of a crossbeam (36).

14. Air passenger bridge as set forth in one of the claims 1 to 13, **characterized in that** the access tunnel (11) comprises an extension (39) which is provided with at least one further docking unit (14) in order to connect the gangway to the aircraft (38).

15. Air passenger bridge as set forth in claim 14, **characterized in that** with respect to the access tunnel (11) said extension (39) is slewable and/or angle-adjustable.

16. Air passenger bridge as set forth in claims 14 or 15, **characterized in that** the extension (39) is telescopable.

## Revendications

1. Passerelle telescopique, en particulier pour l'embarquement et le débarquement des passagers d'un avion (38), avec au moins un tunnel d'accès dont l'inclinaison est réglable (11), pivotant horizontalement et muni d'un côté, d'un dispositif (14) pour s'amarrer à l'avion (38) **caractérisé en ce que** le passerelle telescopique (10) comprend au moins une potence pivotant horizontalement (12) montée en palier sur une colonne (13) et sur laquelle est articulé au moins un tunnel d'accès (11).

2. Passerelle telescopique selon la revendication 1, **caractérisé en ce que** le tunnel d'accès (11) est réglable en hauteur.

3. Passerelle telescopique selon revendication 1 ou 2, **caractérisé en ce que** le tunnel d'accès est articulé (11) à un point de suspension (18), à deux points de suspension (18, 25) ou à trois points de suspension (18, 25, 30) à la potence (12).

4. Passerelle telescopique selon une des revendications 1 à 3, **caractérisé en ce que** le tunnel d'accès (11) est fixé à la colonne (13) de manière réglable en hauteur.

5. Passerelle telescopique selon une des revendications 1 à 4, **caractérisé en ce que** la potence (12) est muni d'un contrepoids (21).

6. Passerelle telescopique selon une des revendications 1 à 5, **caractérisé en ce que** le tunnel d'accès (11) et la potence (12) sont télescopiques.

7. Passerelle telescopique selon une des revendications 1 à 6, **caractérisé en ce que** deux potences pivotant horizontalement (12a, 12b) sont prévues.

8. Passerelle telescopique selon la revendication 7, **caractérisé en ce que** les deux potences pivotant horizontalement (12a, 12b) sont montées en palier sur la même colonne (13).

9. Passerelle telescopique selon revendication 8, **caractérisé en ce que** les deux potences (12a, 12b) s'engrènent.

10. Passerelle telescopique selon une des revendications 7 à 9, **caractérisé en ce que** les deux potences (12a, 12b) sont mobiles indépendamment l'une de l'autre.

11. Passerelle telescopique selon une des revendications 7 à 9, **caractérisé en ce que** les deux potences (12a, 12b) sont couplées l'une avec l'autre.

12. Passerelle telescopique selon la revendication 11, **caractérisé en ce qu'**une extension télescopique (32) est prévue pour le couplage des deux potences (12a, 12b).

13. Passerelle telescopique selon les revendications 7 et 11, **caractérisé en ce que** les deux potences (12a, 12b) sont montées en palier sur des colonnes ayant une certaine distance entre elles (13a, 13b) et couplées l'une à l'autre par une traverse (36).

14. Passerelle telescopique selon une des revendications 1 à 13, **caractérisé en ce qu'**une extension (39) est attribuée au tunnel d'accès (11) qui est munie d'au moins un dispositif supplémentaire servant à amarrer (14) à l'avion (38).

15. Passerelle telescopique selon revendication 14, **caractérisé en ce que** l'extension (39) est pivotante et/ou l'inclinaison est réglable par rapport au tunnel d'accès (11).

16. Passerelle telescopique selon la revendication 14 ou 15, **caractérisé en ce que** l'extension (39) est télescopique.
